# EUROPEAN PATENT APPLICATION

(11) **EP 3 736 147 A1**
(43) Date of publication of application: **11.11.2020**
(21) Application number: 19172769.2
(22) Date of filing: 06.05.2019
(51) Int. Cl.: B60H 1/00, B60H 1/22, B60R 25/33

(54) **METHOD AND SYSTEM FOR CONTROLLING A VEHICLE FEATURE**

(71) Applicant: Ningbo Geely Automobile Research & Development Co. Ltd., Hangzhou Bay New District Ningbo 315336 (CN)
(72) Inventor: NILSSON, Magnus, 448 37 FLODA (SE); LINDBERG NILSSON, Erik, 417 47 GÖTEBORG (SE)
(74) Representative: Zacco Sweden AB

(57) **Abstract**

The present disclosure relates to a method for controlling a vehicle feature (2) comprising registering a GPS-based vehicle speed based on information from a vehicle GPS-receiver (4), and changing an operating setting of, or activating, the vehicle feature (2) when the GPS-based vehicle speed is more than zero km/h, specifically more than 3 km/h, and more specifically more than 6 km/h, while the vehicle (5) is parked. The present disclosure also relates to a corresponding system (1).

## Description

### TECHNICAL FIELD

The disclosure relates to a method and a system for controlling a vehicle feature.

Although the disclosure will be described primarily in relation to a car, the method and system of the disclosure are not restricted to this particular type of vehicle, but may alternatively be installed in other type of vehicles such as minivans, recreational vehicles, off-road vehicles, construction vehicles, marine vessels, motorcycles, trucks, buses, etc.

### BACKGROUND ART

In the field of vehicles, there is an increasing demand for smarter vehicles that are able to automatically behave differently and smarter in various different circumstances. For example, it is known from US 2007/0080792 A1 that a vehicle theft detection system may be arranged to automatically detect whether the vehicle is located above a water surface, which may indicate that the vehicle is transported by a ferry, and to automatically reconfigure a vehicle theft detection system to avoid activating the alarm due to vehicle tilt motion caused by swing movement of the ferry due to wave motion of the sea.

However, despite the activities in the field, there is still a demand for a further improved method and system for controlling a vehicle feature, such that the vehicle automatically behaves differently and smarter in various different circumstances, particularly in terms of the approach for detecting the said different circumstances, and in terms of how the vehicle feature behaves differently to better adapt to the said circumstances.

### SUMMARY OF THE DISCLOSURE

This section provides a general summary of the disclosure, and is not a comprehensive disclosure of its full scope or all of its features.

A general object of the present disclosure is to provide a method and system for controlling a vehicle feature, such that the vehicle automatically behaves differently and smarter in various different circumstances.

This and other objects, which will become apparent in the following, are at least partly accomplished by a method and system as defined in the accompanying independent claim(s).

According to a first aspect of the present disclosure, there is provided a method for controlling a vehicle feature comprising: registering a GPS-based vehicle speed based on information from a vehicle GPS-receiver, and changing an operating setting of, or activating, the vehicle feature when the GPS-based vehicle speed is more than zero km/h, specifically more than 3 km/h, and more specifically more than 6 km/h, while the vehicle is parked.

According to a second aspect of the present disclosure, there is provided a system for controlling a vehicle feature, wherein the system comprises an electronic control unit and a vehicle GPS-receiver, and wherein the vehicle electronic control unit is configured to register a GPS-based vehicle speed based on information from the vehicle GPS-receiver, and to change an operating setting of, or activate, the vehicle feature when the GPS-based vehicle speed is more than zero km/h, specifically more than 3 km/h, and more specifically more than 6 km/h, while the vehicle is parked.

In this way, the method and system for controlling a vehicle feature may in an easily and cost-effectively manner implement a relatively general detection strategy for accurate and correct detecting of relevant circumstances when the method and system for controlling the vehicle feature should be triggered for changing an operating setting of, or activating, the vehicle feature.

Specifically, by detecting that the GPS-based vehicle speed is larger than a threshold value while the vehicle is parked, it is possible to easily and cost-effectively determine a vehicle transport state, i.e. a state in which the vehicle is passively transported between two geographical locations, without a driver or autonomous driving system actively driving the vehicle.

Transportation of a vehicle may for example be performed by means of vehicle carrying ferry, a vehicle transport truck, a vehicle transport rail waggon, or the like

Further advantages are achieved by implementing one or several of the features of the dependent claims.

In one example embodiment, the vehicle is parked when a value or setting of at least one vehicle parameter, vehicle operating mode or vehicle operating state indicates vehicle parking. Thereby, a cost-effective and easily implemented method for determining vehicle parked state is provided.

In one example embodiment, the vehicle is parked when a vehicle speed relative to an underlying surface on which the vehicle is standing is zero. Thereby, the rotational speed of for example a vehicle wheel may be used for determining parking, such that a cost-effective and easily implemented method for determining vehicle parked state is provided.

In one example embodiment, the vehicle is parked when any of the following conditions are fulfilled:
- vehicle parking brake is applied,
- a vehicle propulsion source, such as an internal combustion engine or electrical propulsion system, is shutdown,
- a vehicle control system is in a vehicle parked state,
- a rotational speed of a vehicle propulsion motor, transmission or wheel is zero rad/s,
- a vehicle theft alarm system is activated,
- the vehicle is unoccupied according to a vehicle occupancy detection system,
- a vehicle key fob is removed from a vehicle key fob slot, or
- a vehicle remote keyless entry system does not detect proximity of corresponding key fob.

Each of these alternative conditions for determining vehicle parking has its own individual specific advantage, and anyone thereof may be selected, depending on the circumstances, for providing a cost-effective and easily implemented method for determining vehicle parked state.

In one example embodiment, the step of changing an operating setting of, or activating, the vehicle feature is performed when the GPS-based vehicle speed is more than zero km/h, specifically more than 3 km/h, and more specifically more than 6 km/h, and the vehicle has been continuously parked for at least 1 minute, specifically 5 minutes, and more specifically at least 10 minutes. Thereby, accidental and undesired changing or activation of the vehicle feature may be avoided.

In one example embodiment, the step of changing an operating setting of, or activating, the vehicle feature is performed when, over a time period of at least 1 minute, specifically 5 minutes, and more specifically at least 10 minutes, the GPS-based vehicle speed has continuously been more than zero km/h, specifically more than 3 km/h, and more specifically more than 6 km/h, and the vehicle has been continuously parked. Thereby, accidental and undesired changing or activation of the vehicle feature caused by inaccuracy in terms of the GPS-based vehicle speed is avoided.

In one example embodiment, the step of changing the operating setting of, or activating, the vehicle feature involves blocking of a combustion engine remote or timer based start functionality or combustion powered parking heater remote or timer based start functionality. Thereby, inappropriate emission of exhaust gases within a closed space during vehicle transport, such as vehicle transport on a ferry, may be avoided.

In one example embodiment, the step changing the operating setting of, or activating, the vehicle feature involves providing the vehicle user with a proposal or request to shut-off the combustion engine when the combustion engine is running or when the combustion engine has been running for a certain time period. Thereby, inappropriate emission of exhaust gases within a closed space during vehicle transport, such as vehicle transport on a ferry, may be avoided.

In one example embodiment, the step changing the operating setting of, or activating, the vehicle feature involves providing the vehicle user with a proposal or request to shut-off the combustion powered parking heater when the combustion powered parking heater is running or when the combustion powered parking heater has been running for a certain time period. Thereby, inappropriate emission of exhaust gases within a closed space during vehicle transport, such as vehicle transport on a ferry, may be avoided.

In one example embodiment, the step of changing the operating setting of, or activating, the vehicle feature involves changing a vehicle theft alarm system from a normal alarm mode to a transport alarm mode. Thereby, accidental activation of the theft alarm due to tilt motion or shock/vibration caused by the vehicle transporter, such as vehicle transport ferry or vehicle transport truck, may be avoided.

In one example embodiment, the method comprises, when the vehicle theft alarm system is in the transport alarm mode, disregarding sensor input from any of a shock sensor, vibration sensor or tilt sensor of the vehicle theft alarm system. Thereby, accidental activation of the theft alarm due to tilt motion or shock/vibration caused by the vehicle transporter, such as vehicle transport ferry or vehicle transport truck, may be avoided.

In one example embodiment, the step of changing the operating setting of, or activating, the vehicle feature involves blocking of climate system air pre-cleaning functionality of vehicle passenger compartment. Thereby, worsening of the air quality within the passenger cabin during vehicle transport in a parked state is avoided.

In one example embodiment, the system comprises any of the following: a vehicle parking brake sensor, a vehicle rotational sensor for detecting a rotational speed of a vehicle engine, transmission or wheel, a vehicle theft alarm system, a vehicle occupancy detection system, a vehicle key fob system, or a vehicle remote keyless entry system, and the electronic control unit is configured to change the operating setting of, or activate, the vehicle feature when any of the above-listed sensors or systems indicate vehicle parked state. Each of these alternative sensors or systems indicating vehicle parked state has its own individual specific advantage, and anyone thereof may be selected, depending on the circumstances, for providing a cost-effective and easily implemented method for determining vehicle parked state.

In one example embodiment, the system comprises a vehicle feature in form of a combustion engine with remote or timer based start functionality, and the electronic control unit is configured to block the combustion engine remote or timer based start functionality when the GPS-based vehicle speed is more than zero km/h, specifically more than 3 km/h, and more specifically more than 6 km/h, while the vehicle is parked. Thereby, inappropriate emission of exhaust gases within a closed space during vehicle transport, such as vehicle transport on a ferry, may be avoided.

In one example embodiment, the system comprises a vehicle feature in form of a combustion powered parking heater with remote or timer based start functionality, and the electronic control unit is configured to block the combustion powered parking heater remote or timer based start functionality when the GPS-based vehicle speed is more than zero km/h, specifically more than 3 km/h, and more specifically more than 6 km/h, while the vehicle is parked. Thereby, inappropriate emission of exhaust gases within a closed space during vehicle transport, such as vehicle transport on a ferry, may be avoided.

In one example embodiment, the system comprises a vehicle feature in form of a combustion engine, and the electronic control unit is configured to provide the vehicle user with a proposal or request to shut-off the combustion engine when the combustion engine is running and the GPS-based vehicle speed is more than zero km/h, specifically more than 3 km/h, and more specifically more than 6 km/h, while the vehicle is parked. Thereby, inappropriate emission of exhaust gases within a closed space during vehicle transport, such as vehicle transport on a ferry, may be avoided.

In one example embodiment, the system comprises a vehicle feature in form of a combustion powered parking heater, and the electronic control unit is configured to provide the vehicle user with a proposal or request to shut-off the combustion powered parking heater when the combustion powered parking heater is running and the GPS-based vehicle speed is more than zero km/h, specifically more than 3 km/h, and more specifically more than 6 km/h, while the vehicle is parked. Thereby, inappropriate emission of exhaust gases within a closed space during vehicle transport, such as vehicle transport on a ferry, may be avoided.

In one example embodiment, the system comprises a vehicle feature in form of a vehicle theft alarm system, and the electronic control unit is configured to change an operating setting of a vehicle theft alarm system from a normal alarm mode to a transport alarm mode when the GPS-based vehicle speed is more than zero km/h, specifically more than 3 km/h, and more specifically more than 6 km/h, while the vehicle is parked. Thereby, accidental activation of the theft alarm, for example due to tilt motion or shock/vibration caused by the vehicle transporter, such as vehicle transport ferry or vehicle transport truck, may be avoided.

In one example embodiment, the system comprises a vehicle feature in form of a climate system with air pre-cleaning functionality, and the electronic control unit is configured to block the air pre-cleaning functionality when the GPS-based vehicle speed is more than zero km/h, specifically more than 3 km/h, and more specifically more than 6 km/h, while the vehicle is parked. Thereby, worsening of the air quality within the passenger cabin during vehicle transport in a parked state is avoided.

The disclosure also relates to vehicle comprising the system as described above.

Further features of, and advantages with, the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF THE DRAWINGS

The various example embodiments of the disclosure, including its particular features and example advantages, will be readily understood from the following illustrative and non-limiting detailed description and the accompanying drawings, in which:
Figure 1 is a schematic view of a first example embodiment of the system of the disclosure,
Figure 2 is a schematic view of a further example embodiment of the system of the disclosure,
Figure 3 is a schematic view of still a further example embodiment of the system of the disclosure,
Figure 4 shows a vehicle having the system according to the invention being transported by a ferry,
Figure 5 shows a vehicle having the system according to the invention being transported by a vehicle transport truck,
Figures 6-9 show flow charts of various example embodiments of the method according to the disclosure.

### DETAILED DESCRIPTION OF EXAMPLE EMBODIMENTS OF THE DISCLOSURE

The present disclosure will now be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. Like reference characters refer to like elements throughout the description. The drawings are not necessarily to scale and certain features may be exaggerated in order to better illustrate and explain the exemplary embodiments of the present disclosure.

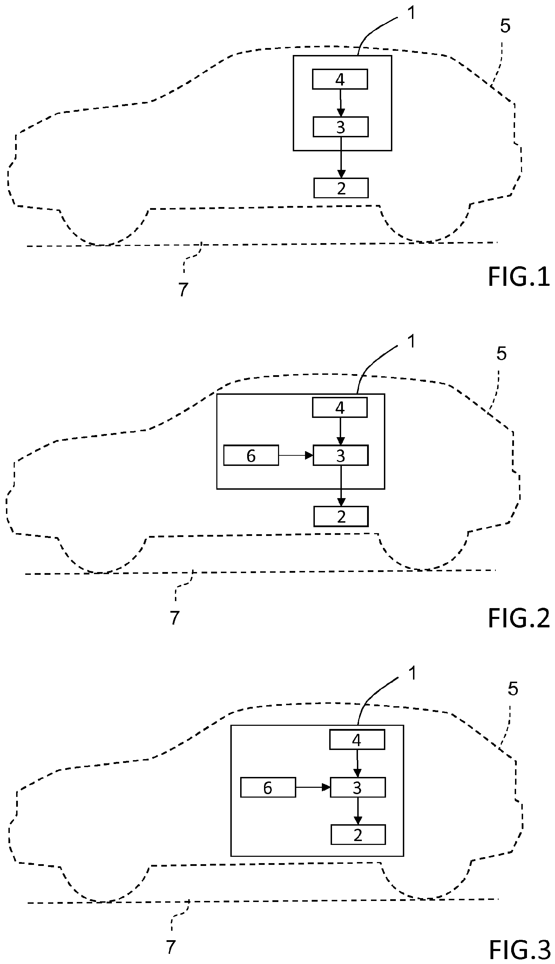

Referring now to figure 1, there is depicted an example embodiment of a system 1 for controlling a vehicle feature 2. The system is configured for being installed in a vehicle 5 including the vehicle feature 2. The system 1 comprises an electronic control unit 3 and a vehicle GPS-receiver 4. The electronic control unit 3 is configured to register a GPS-based vehicle speed based on information from the vehicle GPS-receiver 4, and to change an operating setting of, or activate, the vehicle feature 2 when the GPS-based vehicle speed is more than zero km/h, specifically more than 3 km/h, and more specifically more than 6 km/h, while the vehicle 5 is parked.

The specific speed threshold limit may be set according to the specific circumstances of each implementation, while taking into account aspects such as GPS-based vehicle speed accuracy and reliability, and the approach for determining vehicle parked state.

For example, according to one example embodiment, the vehicle 5 may be deemed parked, i.e. in a vehicle parked state, when a value or setting of at least one vehicle parameter, vehicle operating mode or vehicle operating state indicates vehicle parking. A control system of the vehicle 5 may for example include a parameter held updated and specifically dedicated for signifying current vehicle operating state, such as parked state, driving state, etc.

Furthermore, according an alternative example embodiment, the vehicle 5 may be deemed being parked when a vehicle speed relative to an underlying surface 7 on which the vehicle 5 is standing is zero. Zero vehicle speed relative to an underlying surface 7 on which the vehicle 5 is standing may for example be determined by registering current rotational speed of a part of the vehicle power train, such as for example a vehicle propulsion motor, a transmission component or driving wheel, or the like. In other words, if the rotational speed of for example a crankshaft, an electrical propulsion motor shaft, a transmission shaft or gear wheel, a wheel, or any associated rotational component, is zero, it may be assumed that the vehicle 5 is stationary relative to the underlying surface 7.

According to still an example embodiment as illustrated in figure 2, the system 1 for controlling the vehicle feature 2 may include a part or system of the vehicle 5 functioning as a vehicle parking indicator 6. For example, a vehicle parking brake may be used as vehicle parking indicator 6, wherein the vehicle 5 may be deemed being parked when the vehicle parking brake is applied.

Alternatively, or in combination with above, a vehicle propulsion source, such as an internal combustion engine or electrical propulsion system may be used as vehicle parking indicator 6, wherein the vehicle 5 may be deemed being parked when the a vehicle propulsion source is shutdown.

Alternatively, or in combination with above, a vehicle control system may be used as vehicle parking indicator 6, wherein the vehicle 5 may be deemed being parked when the vehicle control system is in a vehicle parked state.

Alternatively, or in combination with above, a rotational speed of a vehicle propulsion motor 7, transmission or wheel may be used as vehicle parking indicator 6, wherein the vehicle 5 may be deemed being parked when a rotational speed of a vehicle propulsion motor, transmission or wheel is zero rad/s.

Alternatively, or in combination with above, a vehicle theft alarm system may be used as vehicle parking indicator 6, wherein the vehicle 5 may be deemed being parked when the vehicle theft alarm system is activated.

Alternatively, or in combination with above, a vehicle occupancy detection system may be used as vehicle parking indicator 6, wherein the vehicle 5 may be deemed being parked when the vehicle 5 is unoccupied according to a vehicle occupancy detection system.

Alternatively, or in combination with above, a vehicle key fob system may be used as vehicle parking indicator 6, wherein the vehicle 5 may be deemed being parked when a vehicle key fob is removed from a vehicle key fob slot.

Alternatively, or in combination with above, a vehicle remote keyless entry system may be used as vehicle parking indicator 6, wherein the vehicle 5 may be deemed being parked when the vehicle remote keyless entry system does not detect proximity of corresponding key fob.

In other words, the system may comprises a vehicle parking indicator 6 in form of a vehicle parking brake sensor, a vehicle rotational sensor for detecting a rotational speed of a vehicle engine, transmission or wheel, a vehicle theft alarm system, a vehicle occupancy detection system, a vehicle key fob system, or a vehicle remote keyless entry system, and the electronic control unit 3 may be configured to change the operating setting of, or activate, the vehicle feature 2 when the GPS-based vehicle speed is more than zero km/h, specifically more than 3 km/h, and more specifically more than 6 km/h, while any of the above-listed sensors or systems indicate vehicle parked state.

The vehicle feature 2, which the electronic control unit 3 is configured to change the operating setting of, or activating, may for example be a remote or timer based start functionality of a vehicle combustion engine.

Remote start functionality of a vehicle combustion engine typically enables a user to start the combustion engine from remote, i.e. while being outside and spaced-apart from the vehicle 5. The remote start functionality may for example be implemented via wireless communication between the vehicle 5 and a mobile device carried by the user, such as a mobile phone, key fob, smart watch, etc., thereby enabling a user to remotely send a command to the vehicle 5 to start the combustion engine.

Timer based start functionality of the vehicle combustion engine typically enables a user, for example upon leaving the vehicle, to set a timer of a combustion engine start time. For example, a user may set the timer, which may be fixed to the vehicle, on a start time of 06:00 for having an air-conditioned and ready to drive vehicle at 6:30.

In other words, remote or timer based start functionality of a vehicle combustion engine is for example provided for enabling heating of the combustion engine and/or passenger cabin before the user enters the vehicle 5, or for enabling cooling of the passenger cabin by means of a vehicle air conditioner before the user enters the vehicle 5.

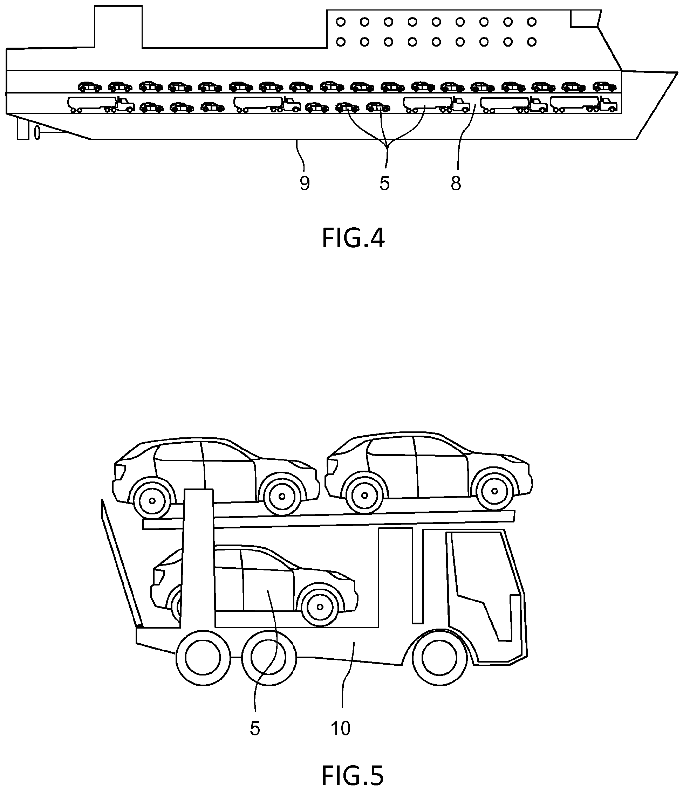

However, operation of the combustion engine during vehicle parking is sometimes undesirable, for example when the vehicle 5 is transported in a parked state within a closed space, such as a parking deck 8 of a vehicle transport ferry 9 as schematically illustrated in figure 4, due to the increasingly harmful health effect of accumulating combustion engine emissions in such a closed space.

Consequently, the system 1 may as schematically illustrated in figure 3 comprise a vehicle feature 2 in form of a combustion engine with remote or timer based start functionality, and the electronic control unit 3 may be configured to block the combustion engine remote or timer based start functionality when the GPS-based vehicle speed is more than zero km/h, specifically more than 3 km/h, and more specifically more than 6 km/h, while the vehicle 5 is parked.

This example corresponds to one embodiment of a system for controlling a vehicle feature, wherein the vehicle automatically behaves differently and smarter in various different circumstances, namely by blocking the combustion engine remote or time based start functionality when the vehicle is being transported. Thereby, the air quality at the parking deck 8 of the ferry 9 is not as much polluted as it possibly otherwise would have been in case the remote or timer based start functionality would have available for providing an already air-conditioned vehicle passenger cabin upon arrival at the harbour port.

According to a further example embodiment, the vehicle feature 2, which the electronic control unit 3 is configured to change the operating setting of, or activating, may for example be a combustion powered parking heater remote or timer based start functionality. A combustion powered parking heater is typically configured for heating up the vehicle, propulsion battery, combustion engine and/or the passenger cabin of a vehicle by burning diesel fuel. Such a parking heater is often remotely started by a user some time before planned departure, while the vehicle is still parking. Alternatively, the combustion powered parking heater may have timer based start functionality, such that a user, for example upon leaving the vehicle, may set a timer controlling a desired combustion engine start time. For example, a user may set the timer, which may be fixed to the vehicle, on a start time of 06:00 for having an air-conditioned and ready to drive vehicle at 6:30.

However, such combustion powered parking heaters generally have poor emission after treatment, such that operation of a combustion powered parking heater sometimes is undesirable, for example when the vehicle 5 is transported in a parked state within a closed space, such as a parking deck 8 of a vehicle transport ferry 9 as schematically illustrated in figure 4, due to the increasingly harmful health effect of accumulating combustion emissions in such a closed space.

Consequently, the system 1 may as schematically illustrated in figure 3 comprise a vehicle feature 2 in form of a combustion powered parking heater with remote or timer based start functionality, and the electronic control unit may be configured to block the combustion powered parking heater remote or timer based start functionality when the GPS-based vehicle speed is more than zero km/h, specifically more than 3 km/h, and more specifically more than 6 km/h, while the vehicle is parked.

This example corresponds to a further embodiment of a system for controlling a vehicle feature, wherein the vehicle automatically behaves differently and smarter in various different circumstances, namely by blocking the combustion powered parking heater remote or timer based start functionality when the vehicle is being transported. Thereby, the air quality at the parking deck 8 of the ferry 9 is not as much polluted as it possibly otherwise would have been in case the remote or timer based start functionality would have available for providing an already warmed-up engine, propulsion battery, and/or vehicle passenger cabin upon arrival at the harbour port.

According to still a further example embodiment, the vehicle feature 2, which the electronic control unit 3 is configured to change the operating setting of, or activating, may for example be a proposal or request to shut-off the combustion engine. As discussed above, operation of the combustion engine during vehicle parking is sometimes undesirable, for example when the vehicle 5 is transported in a parked state within a closed space, such as a parking deck 8 of a vehicle transport ferry 9 as schematically illustrated in figure 4, due to the increasingly harmful health effect of accumulating combustion engine emissions in such a closed space.

However, the user of a vehicle may nevertheless sometimes decide to start the combustion engine while occupying the vehicle that is being transported in a parked state on the parking deck of a moving ferry, thereby causing an increasingly harmful health effect of accumulating combustion engine emissions in such a closed space. In such circumstance, it could be helpful to inform or request the vehicle user to stop the combustion engine for avoiding said harmful health effect.

Consequently, the system 1 may as schematically illustrated in figure 3 comprise a vehicle feature 2 in form of a combustion engine, and the electronic control unit may be configured to provide the vehicle user with a proposal or request to shut-off the combustion engine when the combustion engine is running and the GPS-based vehicle speed is more than zero km/h, specifically more than 3 km/h, and more specifically more than 6 km/h, while the vehicle is parked.

Thereby, the vehicle user may reconsider the decision to have the combustion engine running, and possibly decide to stop the combustion engine, such that the air quality at the parking deck 8 of the ferry 9 is not as much polluted as it otherwise would be.

According to still a further example embodiment, the vehicle feature 2, which the electronic control unit 3 is configured to change the operating setting of, or activating, may for example be a proposal or request to shut-off the combustion powered parking heater. As discussed above, operation of the combustion powered parking heater during vehicle parking is sometimes undesirable, for example when the vehicle 5 is transported in a parked state within a closed space, such as a parking deck 8 of a vehicle transport ferry 9 as schematically illustrated in figure 4, due to the increasingly harmful health effect of accumulating combustion emissions in such a closed space.

However, the user of a vehicle may nevertheless sometimes decide to start the combustion powered parking heater while occupying the vehicle that is being transported in a parked state on the parking deck of a moving ferry, thereby causing an increasingly harmful health effect of accumulating combustion emissions in such a closed space. In such circumstance, it could be helpful to inform or request the vehicle user to stop the combustion powered parking heater for avoiding said harmful health effect.

Consequently, the system 1 may as schematically illustrated in figure 3 comprise a vehicle feature 2 in form of a combustion powered parking heater, and the electronic control unit may be configured to provide the vehicle user with a proposal or request to shut-off the combustion powered parking heater when the combustion powered parking heater is running and the GPS-based vehicle speed is more than zero km/h, specifically more than 3 km/h, and more specifically more than 6 km/h, while the vehicle is parked.

Thereby, the vehicle user may reconsider the decision to have the combustion powered parking heater running, and possibly decide to stop the combustion powered parking heater, such that the air quality at the parking deck 8 of the ferry 9 is not as much polluted as it otherwise would be.

According to still a further example embodiment, the vehicle feature 2, which the electronic control unit 3 is configured to change the operating setting of, or activating, may for example be a climate system air pre-cleaning functionality. Climate system air pre-cleaning typically involves operation of mechanical intake of ambient air into the passenger cabin via a passenger cabin air filter for a certain time period before planned departure with the vehicle. In other words, the user may for example remotely activate the vehicle pre-cleaning functionality maybe 15 - 30 minutes before planned departure for obtaining a fresh and clean air quality within the passenger cabin upon entering the passenger cabin.

However, for those type of vehicles requiring a running combustion engine for powering the vehicle pre-cleaning functionality, operation of vehicle pre-cleaning functionality results in pollution of the ambient air due to combustion emissions, which pollution may be particularly undesirable when the vehicle is being transported in a parked state in a closed space, such as a parking deck 8 of a vehicle transport ferry 9 as schematically illustrated in figure 4.

Moreover, depending on the quality and air-filtering effectiveness of the air filter, air pre-cleaning while the vehicle is being transported in a parked state within a closed space, such as a parking deck 8 of a vehicle transport ferry 9 as schematically illustrated in figure 4, may in fact result in worsening of the passenger cabin air quality due potentially high level of combustion emissions in such a closed space caused by running combustion engines in combination with poor ventilation.

Consequently, the system 1 may as schematically illustrated in figure 3 comprise a vehicle feature 2 in form of a climate system with air pre-cleaning functionality, and the electronic control unit is configured to block the air pre-cleaning functionality, in particular combustion powered air pre-cleaning functionality, when the GPS-based vehicle speed is more than zero km/h, specifically more than 3 km/h, and more specifically more than 6 km/h, while the vehicle is parked.

Thereby, undesirable pollution of the ambient air caused by operation of combustion powered air pre-cleaning while the vehicle is being transported in a parked state, may be avoided, and this is particularly important of the vehicle is transported in a closed space, such as a parking deck 8 of a vehicle transport ferry 9 or the like.

Furthermore, worsening of the air quality within the passenger cabin caused by operation of air pre-cleaning in a space having potentially high level of combustion emissions is also prevented.

The example embodiment described above, in which the vehicle feature 2 is the climate system air pre-cleaning functionality, may according to an alternative embodiment, be supplemented with an ambient air-quality detection device for providing an even smarter pre-cleaning functionality. The ambient air-quality detection device may for example be an ambient air-quality sensor, or a software feature downloading ambient air-quality data from a remote server. This could be accomplished by a system 1 comprising the climate system with air pre-cleaning functionality and the ambient air-quality detection device, and having the electronic control unit is configured to first determine an ambient air-quality index, and subsequently to block the air pre-cleaning functionality when said ambient air-quality index is below a threshold value and the GPS-based vehicle speed is more than zero km/h, specifically more than 3 km/h, and more specifically more than 6 km/h, while the vehicle is parked.

In other words, the electronic control unit would then be configured control blocking of the air per-cleaning functionality taking into account at least three factors: ambient air-quality, GPS-based vehicle speed, and vehicle being in parked state.

Thereby, a smarter decision may be taken by the electronic control unit, involving for example non-blocking of the air pre-cleaning functionality despite being parked on a parking deck 8 of a ferry 9, because the ambient air on the parking deck is relatively good.

The threshold value used for comparison with the ambient air-quality index may be a static threshold value or a dynamic threshold value taking into account for example air-quality within the passenger cabin.

According to still a further example embodiment, the vehicle feature 2, which the electronic control unit 3 is configured to change the operating setting of, or activating, may for example be a vehicle theft alarm system. A vehicle theft alarm system typically includes one or more sensors for detecting a theft event. For example, the theft alarm system may include: one or more switches for detecting opening of a vehicle door, tailgate, and/or the hood; one or more shock sensor configured for being triggered upon a significant impact and/or vibration to the vehicle's body, caused for example by window glass being broken; one or more motion or infrared sensors enabling detection of presence of a person within the passenger cabin; and tilt sensor enabling detection of vehicle being tilted in connection with theft of the vehicle, e.g. caused by towing or lifting the vehicle.

However, the theft alarm system may be inadvertently activated upon vehicle transportation on a ferry 9, as schematically illustrated in figure 4, caused by triggering of the tilt sensors upon vehicle tilt motion as a result of swing or tilt movement of the ferry 9 due to wave motion of the sea. Furthermore, the same problem of inadvertently activated theft alarm system may occur upon transportation of the vehicle 5 on a vehicle transport truck 10, as schematically illustrated in figure 5, caused by triggering of the tilt sensors upon vehicle tilt motion as a result of tilt movement of the vehicle transport truck 10 due to uneven roads, or caused by triggering of the shock sensor induced by significant impact and/or vibration to the vehicle's body as a result of significant vibrations in the vehicle transport truck 10 due to for example low quality, uneven roads, having potholes or the like.

Consequently, for providing a vehicle 5 that automatically behaves differently and smarter in various different circumstances, the system 1 may as schematically illustrated in figure 3 comprise a vehicle feature 2 in form of a vehicle theft alarm system, and the electronic control unit 3 may be configured to change an operating setting of a vehicle theft alarm system from a normal alarm mode to a transport alarm mode when the GPS-based vehicle speed is more than zero km/h, specifically more than 3 km/h, and more specifically more than 6 km/h, while the vehicle is parked.

Thereby, the likelihood for accidental activation of the vehicle theft alarm system may be reduced upon vehicle transport, for example by means of ferry 9 or vehicle transport truck 10.

Specifically, changing the operating setting of a vehicle theft alarm system from a normal alarm mode to a transport alarm mode may involve inactivation of those theft detection sensors and theft detection devices that are prone to trigger accidental theft alarm during vehicle transport, such as for example tilt sensors and/or shock/vibration sensors. Alternatively, changing the operating setting of a vehicle theft alarm system from a normal alarm mode to a transport alarm mode may involve adjustment of the trigger level for triggering theft alarm associated with those theft detection sensors and theft detection devices that are prone to trigger accidental theft alarm during vehicle transport, for reducing the sensitivity associated with those sensors/devices, such as for example tilt sensors and/or shock/vibration sensors.

Consequently, the electronic control unit 3 may be configured to, when the vehicle theft alarm system is in the transport alarm mode, disregarding sensor input from any of a shock sensor, vibration sensor or tilt sensor of the vehicle theft alarm system.

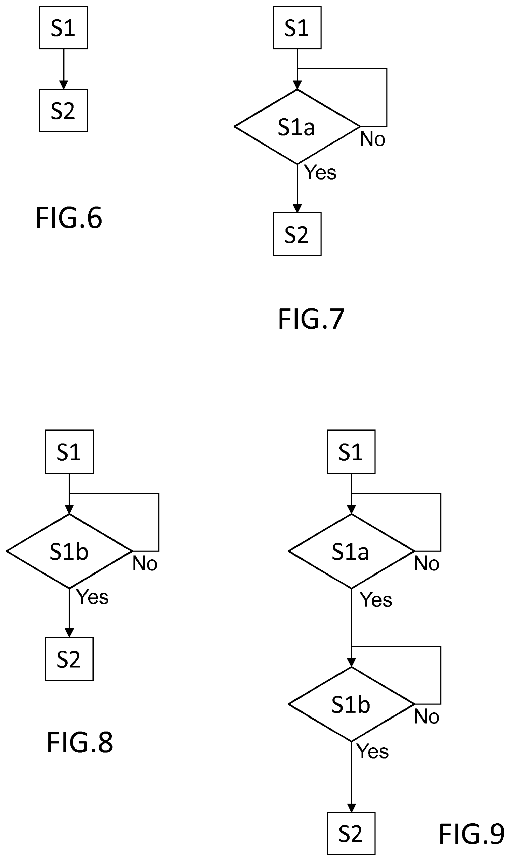

A method for controlling a vehicle feature will now be described with reference to figure 6. The method comprises a first step S1 of registering a GPS-based vehicle speed based on information from a vehicle GPS-receiver, and a second step S2 of changing an operating setting of, or activating, the vehicle feature when the GPS-based vehicle speed is more than zero km/h, specifically more than 3 km/h, and more specifically more than 6 km/h, while the vehicle is parked.

According to an alternative example embodiment as described with reference to figure 7, the method may include a first intermediate step Sla of checking whether the vehicle has been continuously parked for at least 1 minute, specifically 5 minutes, and more specifically at least 10 minutes, and performing the second step S2 of changing an operating setting of, or activating, the vehicle feature when the GPS-based vehicle speed is more than zero km/h, specifically more than 3 km/h, and more specifically more than 6 km/h, and the vehicle has been continuously parked for at least 1 minute, specifically 5 minutes, and more specifically at least 10 minutes. Thereby, undesired changing an operating setting of, or activating, the vehicle feature is avoided in situations where the vehicle is deemed being parked only for a short time period, such as by vehicle stillstand at traffic lights or the like.

According to still an alternative example embodiment as described with reference to figure 8, the method may include a second intermediate step S1b of checking whether the GPS-based vehicle speed has continuously been more than zero km/h, specifically more than 3 km/h, and more specifically more than 6 km/h over a time period of at least 1 minute, specifically 5 minutes, and more specifically at least 10 minutes, and performing the second step S2 of changing an operating setting of, or activating, the vehicle feature when over a time period of at least 1 minute, specifically 5 minutes, and more specifically at least 10 minutes, the GPS-based vehicle speed has continuously been more than zero km/h, specifically more than 3 km/h, and more specifically more than 6 km/h, and the vehicle has been continuously parked. Thereby, undesired changing an operating setting of, or activating, the vehicle feature is avoided in situations where the vehicle is deemed being in a transport state only for a short time period, for example due to temporarily incorrect GPS-based vehicle speed detection.

According to still an alternative example embodiment as described with reference to figure 9, the method may include both the first and second intermediate steps S1a and S1b, such that the method comprises performing the second step S2 of changing an operating setting of, or activating, the vehicle feature when over a time period of at least 1 minute, specifically 5 minutes, and more specifically at least 10 minutes, the GPS-based vehicle speed has continuously been more than zero km/h, specifically more than 3 km/h, and more specifically more than 6 km/h, and the vehicle has been continuously parked for at least 1 minute, specifically 5 minutes, and more specifically at least 10 minutes.

Although the disclosure has been described in relation to specific combinations of components, it should be readily appreciated that the components may be combined in other configurations as well which is clear for the skilled person when studying the present application. Thus, the above description of the example embodiments of the present disclosure and the accompanying drawings are to be regarded as a non-limiting example of the disclosure and the scope of protection is defined by the appended claims. Any reference sign in the claims should not be construed as limiting the scope.

## Claims

1. Method for controlling a vehicle feature (2) comprising:
registering a GPS-based vehicle speed based on information from a vehicle GPS-receiver (4), and
changing an operating setting of, or activating, the vehicle feature (2) when the GPS-based vehicle speed is more than zero km/h, specifically more than 3 km/h, and more specifically more than 6 km/h, while the vehicle (5) is parked.

2. Method according to claim 1, wherein the vehicle (5) is parked when a value or setting of at least one vehicle parameter, vehicle operating mode or vehicle operating state indicates vehicle parking.

3. Method according to any of the preceding claims, wherein the vehicle (5) is parked when a vehicle speed relative to an underlying surface (7) on which the vehicle (5) is standing is zero.

4. Method according to any of the preceding claims, wherein the vehicle (5) is parked when any of the following conditions are fulfilled:
- a vehicle parking brake is applied,
- a vehicle propulsion source, such as an internal combustion engine or electrical propulsion system, is shutdown,
- a vehicle control system is in a vehicle parked state,
- a rotational speed of a vehicle propulsion motor, transmission or wheel is zero rad/s,
- a vehicle theft alarm system is activated,
- the vehicle (5) is unoccupied according to a vehicle occupancy detection system,
- a vehicle key fob is removed from a vehicle key fob slot, or
- a vehicle remote keyless entry system does not detect proximity of corresponding key fob.

5. Method according to any of the preceding claims, wherein the step of changing an operating setting of, or activating, the vehicle feature (2) is performed when the GPS-based vehicle speed is more than zero km/h, specifically more than 3 km/h, and more specifically more than 6 km/h, and the vehicle (5) has been continuously parked for at least 1 minute, specifically 5 minutes, and more specifically at least 10 minutes.

6. Method according to any of the preceding claims, wherein the step of changing an operating setting of, or activating, the vehicle feature (2) is performed when, over a time period of at least 1 minute, specifically 5 minutes, and more specifically at least 10 minutes, the GPS-based vehicle speed has continuously been more than zero km/h, specifically more than 3 km/h, and more specifically more than 6 km/h, and the vehicle (5) has been continuously parked.

7. Method according to any of the preceding claims, wherein the step of changing the operating setting of, or activating, the vehicle feature (2) involves blocking of a combustion engine remote and/or timer based start functionality or combustion powered parking heater remote and/or timer based start functionality.

8. Method according to any of the preceding claims, wherein the step changing the operating setting of, or activating, the vehicle feature (2) involves:
providing the vehicle user with a proposal or request to shut-off the combustion engine when the combustion engine is running or when the combustion engine has been running for a certain time period, or
providing the vehicle user with a proposal or request to shut-off the combustion powered parking heater when the combustion powered parking heater is running or when the combustion powered parking heater has been running for a certain time period.

9. Method according to any of the preceding claims, wherein the step of changing the operating setting of, or activating, the vehicle feature (2) involves changing a vehicle theft alarm system from a normal alarm mode to a transport alarm mode.

10. Method according to claim 9, comprising, when the vehicle theft alarm system is in the transport alarm mode, disregarding sensor input from any of a shock sensor, vibration sensor or tilt sensor of the vehicle theft alarm system.

11. Method according to any of the preceding claims, wherein the step of changing the operating setting of, or activating, the vehicle feature (2) involves blocking of climate system air pre-cleaning functionality of vehicle passenger compartment.

12. System for controlling a vehicle feature (2), the system comprising an electronic control unit and a vehicle GPS-receiver (4), **characterised in that** the vehicle electronic control unit is configured to register a GPS-based vehicle speed based on information from the vehicle GPS-receiver (4), and to change an operating setting of, or activate, the vehicle feature (2) when the GPS-based vehicle speed is more than zero km/h, specifically more than 3 km/h, and more specifically more than 6 km/h, while the vehicle (5) is parked.

13. System according to claim 12, **characterised in that** the system comprises any of the following: a vehicle parking brake sensor, a vehicle rotational sensor for detecting a rotational speed of a vehicle engine, transmission or wheel, a vehicle theft alarm system, a vehicle occupancy detection system, a vehicle key fob system, or a vehicle remote keyless entry system, and wherein the electronic control unit is configured to change the operating setting of, or activate, the vehicle feature (2) when any of the above-listed sensors or systems indicate vehicle parking state.

14. System according to any of the preceding claims 12 to 13, **characterised in that** the system comprises a vehicle feature (2) in form of:
a combustion engine with remote and/or timer based start functionality, and the electronic control unit (3) is configured to block the combustion engine remote and/or timer based start functionality when the GPS-based vehicle speed is more than zero km/h, specifically more than 3 km/h, and more specifically more than 6 km/h, while the vehicle (5) is parked, or
a combustion powered parking heater with remote and/or timer based start functionality, and the electronic control unit (3) is configured to block the combustion powered parking heater remote and/or timer based start functionality when the GPS-based vehicle speed is more than zero km/h, specifically more than 3 km/h, and more specifically more than 6 km/h, while the vehicle (5) is parked, or
a combustion engine, and the electronic control unit (3) is configured to provide the vehicle user with a proposal or request to shut-off the combustion engine when the combustion engine is running and the GPS-based vehicle speed is more than zero km/h, specifically more than 3 km/h, and more specifically more than 6 km/h, while the vehicle (5) is parked, or
a combustion powered parking heater, and the electronic control unit (3) is configured to provide the vehicle user with a proposal or request to shut-off the combustion powered parking heater when the combustion powered parking heater is running and the GPS-based vehicle speed is more than zero km/h, specifically more than 3 km/h, and more specifically more than 6 km/h, while the vehicle (5) is parked, or
a vehicle theft alarm system, and the electronic control unit (3) is configured to change an operating setting of a vehicle theft alarm system from a normal alarm mode to a transport alarm mode when the GPS-based vehicle speed is more than zero km/h, specifically more than 3 km/h, and more specifically more than 6 km/h, while the vehicle (5) is parked, or
a climate system with air pre-cleaning functionality, and the electronic control unit (3) is configured to block the air pre-cleaning when the GPS-based vehicle speed is more than zero km/h, specifically more than 3 km/h, and more specifically more than 6 km/h, while the vehicle (5) is parked.

15. Vehicle (5) comprising the system according to any of the preceding claims 12 to 14.
